# DEMANDE DE BREVET EUROPEEN

(11) **EP 0 562 957 A1**
(43) Date de publication de la demande: **29.09.1993**
(21) Numéro de dépôt: 93400758.4
(22) Date de dépôt: 24.03.1993
(51) Int. Cl.: F16L 41/08

(54) **Inserts pour l'équipement de caissons étanches en matériaux composites**

(30) Priorité: 26.03.1992 FR 9203653
(71) Demandeur: R. ALKAN & Cie., 94460 Valenton (FR)
(72) Inventeur: Mattei, Jean-Pierre, F-94210 La Varenne (FR)
(74) Mandataire: Hud, Robert

(57) **Abrégé**

L'insert comprend une pièce d'appui interne (1) et une pièce externe (2), réalisées en un polyimide. Ces deux pièces enveloppent le drapage (3) en matériau composite du caisson. Une douille métallique (4) est fixée en rotation à la pièce interne (1) par un pion (5). Dans la douille (4) se visse un embout métallique (6) destiné à recevoir l'extrémité d'une canalisation. Un épaulement de l'embout (6) engage une rondelle métallique (8) laquelle appuie sur la pièce externe (2). Le vissage de l'embout (6) assure par l'intermédiaire de la rondelle (8) le serrage du drapage (3) entre les pièces (1) et (2) en polyimide. Une plaque métallique (10) thermiquement réfléchissante, collée sur la pièce externe (2), protège de la température l'intérieur du caisson.

L'insert est conçu pour assurer une excellente étanchéité à haute température.

## Description

L'invention concerne la réalisation de caissons étanches en matériaux composites et, plus particulièrement, le montage d'inserts lors de la fabrication de tels caissons étanches.

Il est connu pour le montage dans des caissons en matériaux composites (par exemple des réservoirs d'huile en aéronautique) d'inserts permettant la réception étanche de canalisations externes, d'utiliser des pièces métalliques vissées enserrant le matériau composite. Cette disposition, lorsqu'elle est soumise à de fortes températures, présente un risque important de rupture d'étanchéité en raison de la différence des coefficients de dilatation.

La présente invention a pour objet de remédier à cet inconvénient en proposant un insert, pour équiper un caisson étanche en matériau composite, qui soit d'un montage facile, d'une structure simple et qui assure une excellente étanchéité à haute température.

Selon l'invention l'insert, destiné à être monté dans un caisson étanche en matériau composite, comprend un élément intérieur et un élément extérieur destinés à envelopper la paroi du caisson à la périphérie d'une ouverture de celle-ci, et il se caractérise en ce que lesdits éléments intérieur et extérieur sont en un matériau synthétique rigide résistant à la chaleur et sont serrés l'un contre l'autre par rapprochement d'une pièce métallique interne et d'une pièce métallique externe, en pressant le matériau composite. De préférence, cette pression s'exerce au moyen d'une rondelle métallique qui s'appuie sur un épaulement de la pièce métallique interne. Cette rondelle métallique est conçue, par élasticité, pour compenser une petite diminution de volume du matériau synthétique en cas d'exposition à la flamme.

Le matériau synthétique résistant à la chaleur peut avantageusement être un polyimide tel que celui désigné sous la marque "Kinel". Les deux éléments en matière synthétique rigide de l'insert peuvent être solidarisés par un collage.

Le rapprochement mutuel des pièces métalliques interne et externe peut avantageusement être obtenu par un vissage, sans toutefois que celà soit limitatif car ce rapprochement pourrait être réalisé par tout autre moyen approprié, par exemple une couronne de boulons.

On comprend que, le coussin constitué par les éléments intérieur et extérieur en polyimide travaillant en compression, il permet dessin couple de serrage plus important, ce qui assure le rattrapage du jeu et donc une meilleure étanchéité. De plus, le polyimide entourant les pièces métalliques de serrage, il protège celles-ci des effets de la température et diminue donc les risques de leur dilatation.

Selon une caractéristique supplémentaire de l'invention, pour permettre une tenue plus longue en température (en particulier en cas d'exposition à la flamme), on peut équiper l'élément extérieur de l'insert d'un organe formant écran thermique, tel qu'une plaque métallique réfléchissante par exemple, qui permet de maintenir le contenu du caisson à une plus faible température.

Pour bien faire comprendre l'invention on en décrira ci-après, à titre d'exemple sans caractère limitatif, une forme d'exécution préférée et des variantes en référence au dessin schématique annexé dans lequel :
la figure 1 est une vue en coupe verticale montrant le montage d'un insert selon l'invention sur un caisson en matériau composite;
la figure 2 montre, en coupe verticale, une variante de l'insert de la figure 1; et
la figure 3 montre, en coupe verticale, une variante d'une partie de l'insert.

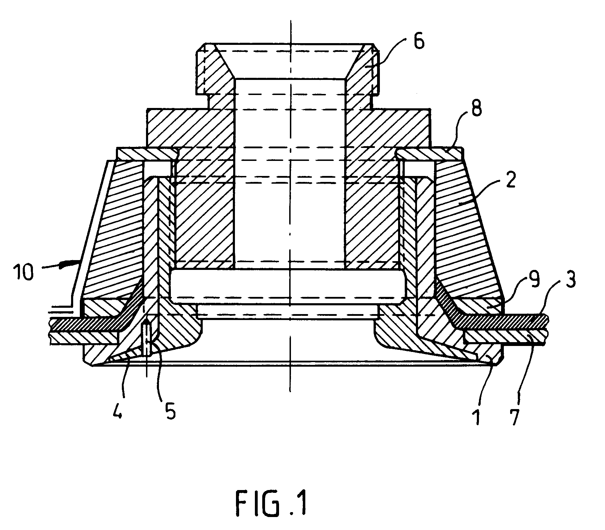

En référence à la figure 1 l'insert comprend une pièce d'appui interne 1 et une pièce externe 2, réalisées en un polyimide désigné sous la marque "Kinel", qui enveloppent le drapage 3 en matériau composite du caisson. Une douille métallique 4 coopère avec la face interne de la pièce d'appui interne 1, et est fixée à cette pièce 1 par un pion 5.

Dans la douille métallique 4 se visse un embout métallique 6 destiné à recevoir, de façon connue, l'extrémité d'une canalisation (non représentée). Une rondelle métallique 8 vient, du fait du vissage de l'embout 6 dans la douille 4, appuyer la pièce d'appui externe 2 sur la pièce interne 1 en enserrant le drapage 3.

On a représenté en 7 une plaque servant à positionner l'insert sur le caisson par exemple par rapport à un autre élément caractéristique. On a désigné en 9 une pièce de garnissage.

On comprend que le maintien de l'insert s'effectue par vissage de l'embout 6 sur la douille 4, avec action de la rondelle 8, le pion 5 évitant la torsion relative entre la douille 4 et la pièce d'appui interne 1. Ce vissage n'applique à l'insert aucune contrainte susceptible d'entraîner sa rupture.

Une plaque métallique thermiquement réfléchissante 10 est collée sur la face extérieure de la pièce 2 de l'insert pour permettre, lorsque le caisson est soumis à de fortes températures, de maintenir son contenu à une plus faible température en augmentant ainsi la tenue en température.

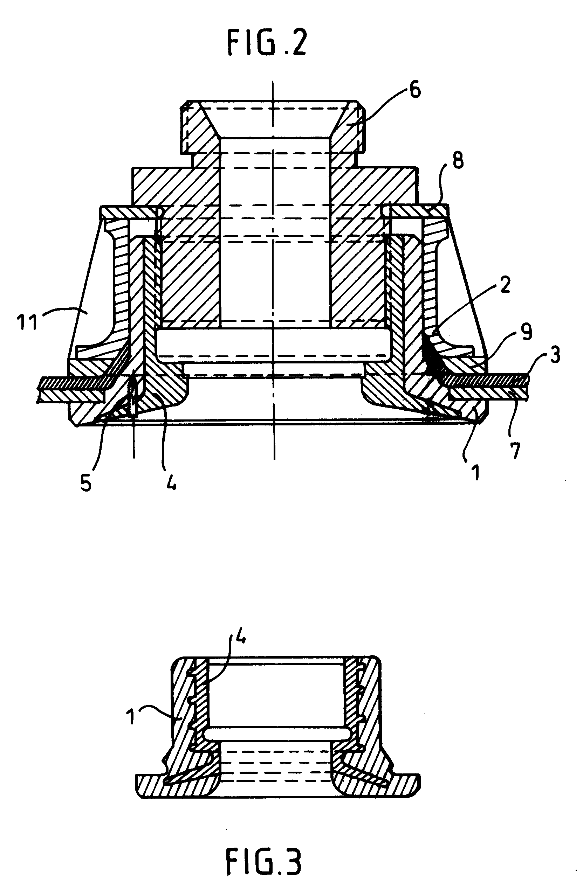

Dans la variante représentée à la figure 2, une couche thermiquement isolante 11, par exemple de silicone, est appliquée sur la pièce externe 2 de l'insert.

Selon la variante de la figure 3, surtout applicable pour la fabrication en série de caissons, la pièce d'appui interne 1 de l'insert est surmoulée sur la douille métallique 4.

On comprendra que la description ci-dessus a été donnée à titre d'exemple, sans caractère limitatif, et que des adjonctions ou des modifications constructives pourraient y être apportées sans sortir du cadre de l'invention.

## Revendications

1. Insert pour montage dans des caissons étanches en matériaux composites, comprenant un élément intérieur (1) et un élément extérieur (2) destinés à envelopper la paroi (3) du caisson à la périphérie d'une ouverture de celle-ci, caractérisé en ce que lesdits éléments intérieur (1) et extérieur (2) sont en un matériau synthétique rigide résistant à la chaleur et sont serrés l'un contre l'autre par rapprochement d'une pièce métallique intérieure (6) et d'une pièce métallique extérieure (4), en pressant le matériau composite (3).

2. Insert selon la revendication 1, caractérisé en ce que le serrage des éléments intérieur (1) et extérieur (2) s'effectue au moyen d'une rondelle métallique (8) coopérant avec un épaulement de la pièce métallique intérieure (6).

3. Insert selon la revendication 1 ou la revendication 2, caractérisé en ce que ladite pièce métallique intérieure est constituée par un embout (6) qui se visse dans une douille (4) formant la pièce métallique extérieure.

4. Insert selon l'une quelconque des revendications 1 à 3, caractérisé en ce que les éléments intérieur (1) et extérieur (2) en matériau synthétique sont solidarisés par collage.

5. Insert selon la revendication 3 ou la revendication 4, caractérisé en ce qu'il comprend un moyen (5) empêchant la rotation de la douille métallique (4) par rapport à l'élément intérieur (1) en matériau synthétique.

6. Insert selon l'une quelconque des revendications 1 à 5, caractérisé en ce que ledit matériau synthétique rigide est un polyimide.

7. Insert selon l'une quelconque des revendications 1 à 6, caractérisé en ce qu'un élément thermiquement réfléchissant, tel qu'une plaque métallique (10), est fixé sur l'élément externe (2).

8. Insert selon l'une quelconque des revendications 1 à 6, caractérisé en ce qu'une couche d'un isolant thermique (11) est appliquée sur l'élément externe (2).

9. Insert selon l'une quelconque des revendications précédentes, caractérisé en ce que son élément intérieur (1) est réalisé par surmoulage de ladite pièce métallique (4).
